Europäisches Patentamt

(19) European Patent Office

Office européen des brevets

(11) Publication number: **0 107 428**
A2

## (12) EUROPEAN PATENT APPLICATION

(21) Application number: **83306081.7**

(22) Date of filing: **07.10.83**

(51) Int. Cl.³: **C 04 B 35/04,** C 03 B 37/025,
C 03 B 19/00, B 28 B 1/32

(30) Priority: **14.10.82 US 434385**

(71) Applicant: **Nath, Dilip K., Dr., 4 Cavartorta Drive,
Framingham Massachusetts (US)**

(43) Date of publication of application: **02.05.84**
**Bulletin 84/18**

(72) Inventor: **Nath, Dilip K., Dr., 4 Cavartorta Drive,
Framingham Massachusetts (US)**

(74) Representative: **Pratt, David Martin et al, Brookes &
Martin High Holborn House 52/54 High Holborn, London.
WC1V 6SE (GB)**

(84) Designated Contracting States: **DE FR GB IT NL SE**

(54) **Plasma processed sinterable ceramics.**

(57) Highly pure and dense sintered ceramics are produced by passing ceramic precursors through a radio frequency plasma torch (11), and reacting these precursors to produce a powder which is subsequently sintered to desirable shape and size. The powder is very reactive, fine, pure, spherical, free of agglomeration and has a narrow size distribution. These properties are ideal for producing highly-dense, high-strength ceramics, and at substantially lower temperatures than the melting or decomposition points of these materials. Ceramic bodies made in this way can be shaped into a wide variety of forms.

EP 0 107 428 A2

- 1 -

PLASMA PROCESSED SINTERABLE CERAMICS

This invention relates to a method of forming a high-purity ceramic or glass body.

Chemical vapour deposition (CVD) is broadly defined as the formation of solid products by the thermally-activated reaction of gaseous precursors. One of the oldest known CVD reactions is the pyrolysis of hydrocarbon to produce soot, fouled spark plugs or highly aniosotropic pyrolytic graphite currently employed in rocket nozzles and nose cones of atmosphere re-entry vehicles. A CVD reaction generates glassy or amorphous powders, transparent bodies or crystalline powders depending on the nature of the fabrication technique. A few examples will be elucidated to show the versatility of this method for the production of ceramic and glass bodies.

Recently, a novel process has been proposed for the preparation of ceramic powders with unique physical and chemical characteristics. These powders can be produced by laser-driven CVD reactions, and are claimed to result in superior properties of the sintered ceramic bodies. It may be cited as an example that $Si_2N_4$ ceramic powders produced by other CVD methods, for example furnace-heated vapour and arc-plasma techniques, show agglomeration and wider size distribution. As a result, exaggerated grain growth and weakening of the ceramic bodies are observed on many occasions.

Similarly, CVD reactions have been widely used for the fabrication of official fibre waveguide glass preforms (see U.S. Patent Specifications Nos 4,062,665, 4,262,035 and 4,276,072). For example, U.S. Patent Specification Nos 4,062,665 describes a method in which glass powders produced through a burner wave are deposited on an axially-rotated substrate which is pulled upwards gradually. The porous soot rod preform thus generated by this method is sintered to transparent glass rod for the manufacture of optical fibre. U.S. Patent Specification No 4,262,035 describes a method in which a radio frequency plasma is formed inside a substrate glass tube, through which glass tube precursor vapours are passed to generate glass particulates to be deposited inside the substrate tube in the form of either powder or glass. In the case of powder, the substrate tube is oscillated between a radio frequency coil for chemical vapour deposition and a burner for sintering. The resultant hollow tube is finally collapsed to a solid glass rod and drawn into fibre. In the method described in U.S. Specification No 4,276,072, a substrate tube acts as a susceptor to heat the glass vapour precursors for the deposition of transparent glass directly on the substrate tube which is a hollow graphite cylinder.

The present invention provides a method of forming a high-purity ceramic or glass body, the method comprising the steps of introducing ceramic-forming materials in the form of a vapour or an atomised solution into a radio frequency operated plasma torch, reacting said materials in plasma to produce a ceramic powder, collecting the powder, shaping the collected powder into a form, and sintering the resulting form into a highly-dense ceramic product.

Advantageously, the powder is collected on a movable substrate. Preferably, the powder is collected as the substrate is moved downwardly relative to the plasma flame. The substrate may be a shaping means such as a die. Conveniently, the shaping means is heated to a sintering temperature to effect said sintering of the collected and shaped powder into the highly-dense ceramic product.

In a preferred embodiment, the collected and shaped ceramic powder is first partially sintered to provide a rigid structure, and the rigid structure is then subjected to a second sintering operation to complete the sintering. The partial sintering reduces the porosity and increases the density of the shaped structure. The second sintering operation is preferably carried out in a separate furnace.

As an alternative to collecting the powder on a movable substrate, the powder may be collected on a filter.

Advantageously, a radio frequency coil is used to operate the plasma torch. Preferably, the radio frequency coil is inductively coupled into the radio frequency plasma. The radio frequency coil may surround, and be approximately concentric with, the plasma torch.

Preferably, the pressure inside the plasma torch is higher than the ambient surroundings during the formation of the powder.

The plasma gas may be selected from the group consisting of argon, krypton, helium, hydrogen, oxygen, nitrogen and mixtures thereof.

Advantageously, the radio frequency is between 1KHz and 100MHz.

The torch, equipment and chemicals are commercially available or as needed may be developed to fabricate the products. The chemical nature of the products are oxides, nitrides, carbides, borides and similar high temperature resistant materials or their mixtures. The resultant products are highly pure approaching the theoretical properties of the products.

The invention will now be described in greater detail, by way of example, with reference to the accompanying drawing, the single figure of which is a schematic view of a general model apparatus for particle formation in a radio frequency plasma torch and collection by means of a substrate and/or a filter.

The drawing shows one form of powder deposition apparatus of the present invention. The general method consists of passing pure argon gas through a torch 11 which is surrounded by a radio frequency induction coil 6. The gas is ignited in the form of plasma by an inductively-heated graphite rod or a sparking coil (not shown). Argon is the simplest known gas to start the plasma, this being due to its low heat capacity at ionisation temperature. The power source of the radio frequency induction coil is a radio frequency generator 5, and the plasma is a "hot" or "equilibrium" plasma having the characteristics of a high gas temperature and an approximate equality between the gas and electron temperature. This type of plasma is produced at a frequency higher than 15Mhz, and is distinctly different from glow discharges.

After argon plasma is stabilised, it may be fully or partially replaced by another gas (such as oxygen, nitrogen, hydrogen, krypton or helium) to support the chemical reactions that convert the gaseous precursors to the particulate powder products. When the plasma is stabilised by adjusting the electromagnetic conditions of the radio frequency generator 5, reactant chemicals, that is to say ceramic-forming materials or precursors in the form of vapour with or without a carrier gas, are passed from a chemical·delivery system 1 through a torch tube 2. Since the gases are fed to the torch at high velocity and pressure, the entry port 3 of plasma gases and the entry port 4 of plasma containment gases must be tangential to the torch tube 6, otherwise the plasma is swept away causing extinction. The tangential entry maintains a spiral flow of the gases through the torch tube 6, and properly establishes the fluid dynamics of the system so as to stabilise the plasma. The arrangement shown represents but one form of apparatus that can be used to carry out the present invention. The number of tubes in the torch 11, the types of chemicals, plasma gases and containment gases, and the overall torch design can be varied widely to produce particulate sinterable ceramic solids.

Plasma is composed of light quanta, ions, atoms and molecules in the ground or excited state. The exact sequence of chemical reactions in the plasma is not well understood. However, at a temperature of about 20,000° K, the presence of free radicals and other reactant species, and the interaction of reactant species during its passage through the plasma zone, make it possible to reach a conversion efficiency of 100%. The extremely reactive conditions of the plasma also make it possible to produce a wide variety of high temperature powders. By high temperature powders, is meant powders stable at high temperature. A few examples of these highly sinterable powders and the reactant chemicals are shown in Table I.

TABLE I

Reactant Chemicals and Powder Products

| Reactant Chemicals | Reaction Products | Powder Products | Type of Products |
|---|---|---|---|
| $SiCl_4 + CH_4$ | $SiC + 4HCl$ | $SiC$ | Carbide |
| $3SiH_4 + 4NH_3$ | $Si_3N_4 + 12H_2$ | $Si_3N_4$ | Nitride |
| $B_2H_6 + NH_3$ | $2BN + 6H_2$ | $BN$ | Nitride |
| $WF_6 + CH_4 + H_2$ | $WC + 6HF$ | $WC$ | Carbide |
| $TiCl_4 + B_2H_6 + Cl_2$ | $TiB_2 + 6HCl$ | $TiB_2$ | Boride |

The powders are formed on the plasma front as a visible turbid cloud, and captured on either a movable subtrate 7 positioned in a powder chamber 10, or by a filter 9. The filter 9 is positioned in an exhaust gas line 13, one end of which communicates with the powder chamber 10, the other end being connected to a vacuum exhaust means (not shown). Thus, the exhaust means simultaneously draws out both exhaust and powder from the powder chamber 10, the powder being captured by filter 9.

Where a movable substrate 7 is used to collect the powder, the substrate is withdrawn away from the plasma flame during the course of powder deposition on the substrate. Preferably, the substrate 7 is moved in a downwards direction 8 away from the plasma flame as the deposited layer grows vertically. Thus, by selection of a substrate 7 of proper geometric design, the shape and size of the final product can be controlled at this stage. For example, a silicon boride rod can be mabe by using a circular substrate plate as the substrate 7. As the deposition of the powder and downwards movement of the substrate 7 continue, the deposited powder takes the physical form of a porous rod which can be sintered to produce a pore-free silicon boride rod. The resultant pure silicon boride rod is extremely pure, and can be drawn into valuable electrical conductors.

Other ceramic products like sheets, tubes and containers can be obtained by appropriately designing the substrate 7, the collection and shaping of the powder and then finally sintering. Similar examples can be given for the production of other ceramic products. For example, silicon nitride, silicon carbide and other ceramic powders deposited on the substrate 7 can be similarly sintered to highly dense bodies. It is desirable that the substrate 7 is made of an inert material such as graphite. Graphite is a preferred material due to its low reactivity towards other chemical compounds at the temperature of sintering of the present invention. As mentioned above, the sintering temperature of these powders is lower than the melting or decomposition points of the compounds.

The superior sintering property of the powders is due to the fact that powder particles are spherical, 0.1 micron or smaller in diameter, extremely pure, amorphous or glassy, and reactive having a narrow size distribution and a specific surface of about 75 $m^2$/gm. The sintering of the ceramic powders does not occur through viscous flow as in the case of glasses, but rather through Bingham flow. The radius of curvature of the particles is small, and the resultant excess free energy of the high surface area provides the driving force for densification. The net effects in the final products are characterised by decrease in the surface area, grain growth and the reduction of volume porosity of various powder compacts by 25-60% when approaching theoretical density. As noted above, the sintering temperature of ceramics to produce highly dense bodies is also much lower. For example, $Si_3N_4$ can be sintered at 1550°C.

The powders collected at the filter 9 (or at a substrate that is not a shaping means as discussed above) are removed therefrom and placed in a die, mould or other suitable shaping means, and processed therein so as to provide a product of desired shape. The filter 9 may be a microfibre filter, and the substrate may not be used at all for collection of the particules. In any case, 100% of the powder produced is collected. The powder may be compacted in a die by conventional means, for example, under pressure, pressureless or in combination with a binder. Where a binder is used, the organics should be decomposed at a suitable lower temperature before sintering. Polymethyl methacrylate is one example of a suitable binder. The die is, in general, made of graphite, but other dies can also be used.

Instead of carrying out a single sintering operation, the collected and shaped ceramic powder may be first partially sintered to provide a rigid structure. The rigid structure is then subjected to a second sintering operation to complete the sintering. It is important that the sintering operation(s) be conducted while simultaneously purging the heating zone or furnace with a suitable purging gas. Suitable purging gases include any inert gas, that is to say any gas which does not react with the ceramic product being sintered. The preferred purging gas is helium.

The present invention is so universal regarding the range of ceramic products that can be fabricated, that further elucidation of the novel process will be described through the following example, which is not to be considered limiting.

### EXAMPLE

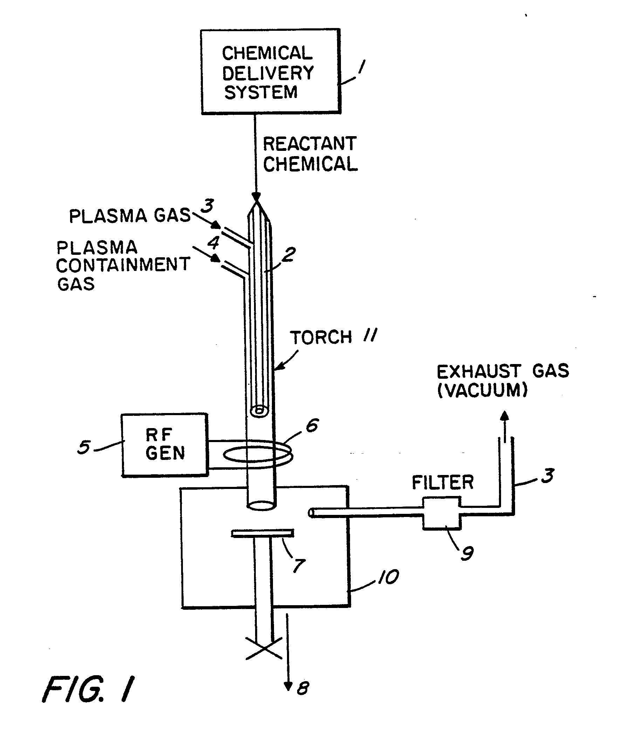

A radio frequency generator as shown in Figure 1 is employed and operated at a power level and frequency of 2.5 kilowatts or above and 15MHz or above. The plasma is formed with argon gas flowing at about 750 ml/minute. Silane gas is introduced into the torch at a rate of 55 ml/minute. Silane and ammonia are introduced at a rate of 550 ml/minute. The silicon nitride powder formed is deposited on a circular substrate plate which is moved in a downwards direction as the deposited layer of silicon nitride grows vertically. When the deposition is complete, the deposited powder takes the physical form of a porous rod of amorphous powder. The porous rod is then sintered at a temperature of 1550°C to provide pore-free dense silicon nitride rod.

CLAIMS

1. A method of forming a high-purity ceramic or glass body, the method comprising the steps of introducing ceramic-forming materials in the form of a vapour or an atomised solution into a radio frequency operated plasma torch, reacting said materials in plasma to produce a ceramic powder, collecting the powder, shaping the collected powder into a form, and sintering the resulting form into a highly-dense ceramic product.

2. A method according to claim 1, wherein the powder is collected on a movable substrate.

3. A method according to claim 2, wherein the powder is collected as the substrate is moved downwardly relative to the plasma flame.

4. A method according to claim 2 or claim 3, wherein the substrate is a shaping means.

5. A method according to claim 4, wherein the shaping means is a die.

6. A method according to claim 4, wherein the shaping means is heated to a sintering temperature to effect said sintering of the collected and shaped powder into the highly-dense ceramic product.

7. A method according to any one of claims 1 to 6, wherein the collected and shaped ceramic powder is first partially sintered to provide a rigid structure, and the rigid structure is then subjected to a second sintering operation to complete the sintering.

8. A method according to claim 1, wherein the powder is collected on a filter.

9. A method according to any one of claims 1 to 8, wherein a radio frequency coil is used to operate the plasma torch.

10. A method according to claim 9, wherein the radio frequency coil is inductively coupled into the radio frequency plasma.

11. A method according to claim 9 or claim 10, wherein the radio frequency coil surrounds, and is approximately

- 2 -

0107428

concentric with, the plasma torch.

12. A method according to any one of claims 1 to 11, wherein the pressure inside the plasma torch is higher than the ambient surroundings during the formation of the powder.

13. A method according to any one of claims 1 to 12, wherein the plasma gas is selected from the group consisting of argon, krypton, helium, hydrogen, oxygen, nitrogen and mixtures thereof.

14. A method according to any one of claims 1 to 13, wherein the radio frequency is between 1KHz and 100MHz.

FIG. 1